# EUROPEAN PATENT SPECIFICATION

(11) **EP 4 399 518 B1**
(45) Date of publication and mention of the grant of the patent: **10.06.2026**
(21) Application number: 22782461.2
(22) Date of filing: 05.09.2022
(51) Int. Cl.: G01N 30/86

(54) **METHOD FOR AUTOMATED QUALITY CHECK OF CHROMATOGRAPHIC AND/OR MASS SPECTRAL DATA**
VERFAHREN ZUR AUTOMATISIERTEN ÜBERPRÜFUNG VON CHROMATOGRAFISCHEN UND/ODER MASSENSPEKTRALDATEN
PROCÉDÉ DE CONTRÔLE DE QUALITÉ AUTOMATIQUE DE DONNÉES CHROMATOGRAPHIQUES ET/OU SPECTRALES DE MASSE

(30) Priority: 06.09.2021 EP 21195136
(43) Date of publication of application: 17.07.2024
(73) Proprietor: F. Hoffmann-La Roche AG, 4070 Basel (CH); Roche Diagnostics GmbH, 68305 Mannheim (DE)
(72) Inventor: TARASOV, Kirill, 82377 Penzberg (DE); REICHERT, Andreas, 82377 Penzberg (DE); HUMMEL, Manuela, 82377 Penzberg (DE); LANG, Robert, 81477 München Süd (DE); WAGNER, Marius, 81477 München Süd (DE)
(74) Representative: Altmann Stößel Dick Patentanwälte PartG mbB
(86) International application number: PCT/EP2022/074552
(87) International publication number: WO 2023/031447

(56) References cited:
- US-A1- 2014 287 947
- US-A1- 2021 063 410
- US-A1- 2021 190 736
- JIARUI DING ET AL: "Feature Selection for Tandem Mass Spectrum Quality Assessment via Sparse Logistical Regression", BIOINFORMATICS AND BIOMEDICAL ENGINEERING , 2009. ICBBE 2009. 3RD INTERNATIONAL CONFERENCE ON, IEEE, PISCATAWAY, NJ, USA, 11 June 2009 (2009-06-11), pages 1 - 4, XP031488645, ISBN: 978-1-4244-2901-1
- BRETT G. AMIDAN ET AL: "Signatures for Mass Spectrometry Data Quality", JOURNAL OF PROTEOME RESEARCH, vol. 13, no. 4, 24 March 2014 (2014-03-24), pages 2215 - 2222, XP055529723, ISSN: 1535-3893, DOI: 10.1021/pr401143e

## Description

### Technical Field

The invention relates to a method for automated quality check of chromatographic and/or mass spectral data, a test system, a computer program and a computer program product. The proposed methods and devices can be used in the technical field of mass spectrometry, specifically for liquid chromatography-mass spectrometry.

### Background art

Current Mass Spectrometry (MS) data processing usually requires manual data review of all acquired data and subsequent manual correction of about 5 -20 % of the results due to high error rates. It is performed by trained operators through tedious visual analysis of hundreds of plots. Manually flagging of untrustworthy data obtained by using MS instruments such as liquid chromatography coupled with mass spectrometry (LC-MS) or tandem mass spectrometry (LC-MS/MS) is time consuming. However, there are only a few solutions to flagging untrustworthy results generated by automated peak integration. The intention of the suggested approaches is to reduce the amount of manual review by focusing on problematic results. However, still a substantial portion of data has to be revised and potentially manually re-integrated.

Further, some of these approaches rely on machine learning approaches. However, since these approaches depend on real training datasets they are tailored to specific laboratory settings, subjectively labeled as "good" or "bad", and limited in sample size.

For example, www.indigobio.com/ascent/ describes an ASCENT's peak processor which may still run into instances where manual inspection is required. ASCENT notifies you of those peaks which should be reviewed, and presents them with a set of peak-focused flags. This approach may reduce, but not replace manual peak review. Similarly Yu M, Bazydlo LAL, Bruns DE, Harrison JH Jr., "Streamlining Quality Review of Mass Spectrometry Data in the Clinical Laboratory by Use of Machine Learning", Arch Pathol Lab Med. 2019 Aug;143(8):990-998. doi: 10.5858/arpa.2018-0238-OA describes to determine whether a classification model created by using standard machine learning algorithms can verify analytically acceptable MS results and thereby reduce manual review requirements. The proposed technique may reduce but not replacing manual peak review. Toghi Eshghi S, Auger P, Mathews WR, "Quality assessment and interference detection in targeted mass spectrometry data using machine learning", Clin Proteomics. 2018 Oct 6;15:33. doi: 10.1186/s12014-018-9209-x describe that the algorithm takes advantage of supervised machine learning to identify peaks with interference or poor chromatography based on a set of peaks that have been annotated by an expert analyst. Using TargetedMSQC to analyze targeted proteomics data reduces the time spent on manual inspection of peaks and improves both speed and accuracy of interference detection. Again, the proposed technique may reduce but not replacing manual peak review. MS data quality classification is described in JIARUI DING ET AL: "Feature Selection for Tandem Mass Spectrum Quality Assessment via Sparse Logistical Regression",BIOINFORMATICS AND BIOMEDICAL ENGINEERING , 2009. ICBBE 2009. 3RD INTERNATIONAL CONFERENCE ON, IEEE, PISCATAWAY, NJ, USA, 11 June 2009 (2009-06-11).

### Problem to be solved

It is therefore an objective of the present invention to provide a method for automated quality check of chromatographic and/or mass spectral data, a test system, a computer program and a computer program product, which avoid the above-described disadvantages of known methods, devices, computer programs and computer program products. In particular, the method and devices shall be provided allowing replacing manual peak review.

### Summary

This problem is addressed by a method for automated quality check of chromatographic and/or mass spectral data, a test system, a computer program and a computer program product, with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In the invention according to claim 1, a computer implemented method for automated quality check of chromatographic and/or mass spectral data is proposed.

The term "computer implemented method" as used herein is a broad term and is to be given its ordinary and customary meaning to a person of ordinary skill in the art and is not to be limited to a special or customized meaning. The term specifically may refer, without limitation, to a method involving at least one computer and/or at least one computer network. The computer and/or computer network may comprise at least one processor which is configured for performing at least one of the method steps of the method according to the present invention. Preferably each of the method steps is performed by the computer and/or computer network. The method may be performed completely automatically, specifically without user interaction. The terms "automatically" and "automated" as used herein are broad terms and are to be given their ordinary and customary meaning to a person of ordinary skill in the art and is not to be limited to a special or customized meaning. The terms specifically may refer, without limitation, to a process which is performed completely by means of at least one computer and/or computer network and/or machine, in particular without manual action and/or interaction with a user.

The terms "mass spectral data" as used herein is a broad term and is to be given its ordinary and customary meaning to a person of ordinary skill in the art and is not to be limited to a special or customized meaning. The term specifically may refer, without limitation, to data obtained by using at least one mass spectrometry device, in particular to at least one mass spectrum.

The term "chromatographic data" as used herein is a broad term and is to be given its ordinary and customary meaning to a person of ordinary skill in the art and is not to be limited to a special or customized meaning. The term specifically may refer, without limitation, to data obtained by using at least one chromatography device, e.g. at least one liquid chromatograph. The chromatographic data may comprise at least one chromatogram.

The term "mass spectrometry" as used herein is a broad term and is to be given its ordinary and customary meaning to a person of ordinary skill in the art and is not to be limited to a special or customized meaning. The term specifically may refer, without limitation, to an analytical technique for determining a mass-to-charge ratio of ions. The mass spectrometry may be performed using at least one mass spectrometry device. As used herein, the term "mass spectrometry device", also denoted "mass analyzer", is a broad term and is to be given its ordinary and customary meaning to a person of ordinary skill in the art and is not to be limited to a special or customized meaning. The term specifically may refer, without limitation, to an analyzer configured for detecting at least one analyte based on the mass-to-charge ratio. The mass analyzer may be or may comprise at least one quadrupole analyzer. As used herein, the term "quadrupole mass analyzer" is a broad term and is to be given its ordinary and customary meaning to a person of ordinary skill in the art and is not to be limited to a special or customized meaning. The term specifically may refer, without limitation, to a mass analyzer comprising at least one quadrupole as mass filter. The quadrupole mass analyzer may comprise a plurality of quadrupoles. For example, the quadrupole mass analyzer may be a triple quadrupole mass spectrometer. As used herein, the term "mass filter" is a broad term and is to be given its ordinary and customary meaning to a person of ordinary skill in the art and is not to be limited to a special or customized meaning. The term specifically may refer, without limitation, to a device configured for selecting ions injected to the mass filter according to their mass-to-charge ratio m/z. The mass filter may comprise two pairs of electrodes. The electrodes may be rod-shaped, in particular cylindrical. In ideal case, the electrodes may be hyperbolic. The electrodes may be designed identical. The electrodes may be arranged in parallel extending along a common axis, e.g. a z axis. The quadrupole mass analyzer may comprise at least one power supply circuitry configured for applying at least one direct current (DC) voltage and at least one alternating current (AC) voltage between the two pairs of electrodes of the mass filter. The power supply circuitry may be configured for holding each opposing electrode pair at identical potential. The power supply circuitry may be configured for changing sign of charge of the electrode pairs periodically such that stable trajectories are only possible for ions within a certain mass-to-charge ratio m/z. Trajectories of ions within the mass filter can be described by the Mathieu differential equations. For measuring ions of different m/z values DC and AC voltage may be changed in time such that ions with different m/z values can be transmitted to a detector mass spectrometry device.

The mass spectrometry device may further comprise at least one ionization source. As used herein, the term "ionization source", also denoted as "ion source", is a broad term and is to be given its ordinary and customary meaning to a person of ordinary skill in the art and is not to be limited to a special or customized meaning. The term specifically may refer, without limitation, to a device configured for generating ions, e.g. from neutral gas molecules. The ionization source may be or may comprise at least one source selected from the group consisting of: at least one gas phase ionization source such as at least one electron impact (EI) source or at least one chemical ionization (CI) source; at least one desorption ionization source such as at least one plasma desorption (PDMS) source, at least one fast atom bombardment (FAB) source, at least one secondary ion mass spectrometry (SIMS) source, at least one laser desorption (LDMS) source, and at least one matrix assisted laser desorption (MALDI) source; at least one spray ionization source such as at least one ther-mospray (TSP) source, at least one atmospheric pressure chemical ionization (APCI) source, at least one electrospray (ESI), and at least one atmospheric pressure ionization (API) source.

The mass spectrometry device may comprise at least one detector. As used herein, the term "detector", is a broad term and is to be given its ordinary and customary meaning to a person of ordinary skill in the art and is not to be limited to a special or customized meaning. The term specifically may refer, without limitation, to an apparatus configured for detecting incoming ions. The detector may be configured for detecting charged particles. The detector may be or may comprise at least one electron multiplier.

The mass spectrometry device, in particular the detector and/or at least one processing unit of the mass spectrometry device, may be configured to determining at least one mass spectrum of the detected ions. As used herein, the term "mass spectrum" is a broad term and is to be given its ordinary and customary meaning to a person of ordinary skill in the art and is not to be limited to a special or customized meaning. The term specifically may refer, without limitation, to a two dimensional representation of signal intensity vs the charge-to-mass ratio m/z, wherein the signal intensity corresponds to abundance of the respective ion. The mass spectrum may be a pixelated image. For determining resulting intensities of pixels of the mass spectrum, signals detected with the detector within a certain m/z range may be integrated. The analyte in the sample may be identified by the processing unit. Specifically, the processing unit may be configured for correlating known masses to the identified masses or through a characteristic fragmentation pattern.

The mass spectrometry device may be or may comprise a liquid chromatography mass spectrometry device. The mass spectrometry device may be connected to and/or may comprise at least one liquid chromatograph. The liquid chromatograph may be used as sample preparation for the mass spectrometry device. Other embodiments of sample preparation may be possible, such as at least one gas chromatograph. As used herein, the term "liquid chromatography mass spectrometry device" is a broad term and is to be given its ordinary and customary meaning to a person of ordinary skill in the art and is not to be limited to a special or customized meaning. The term specifically may refer, without limitation, to a combination of liquid chromatography with mass spectrometry. The mass spectrometry device may comprise at least one liquid chromatograph. The liquid chromatography mass spectrometry device may be or may comprise at least one high performance liquid chromatography (HPLC) device or at least one micro liquid chromatography (µLC) device. The liquid chromatography mass spectrometry device may comprise a liquid chromatography (LC) device and a mass spectrometry (MS) device, in the present case the mass filter, wherein the LC device and the mass filter are coupled via at least one interface. The interface coupling the LC device and the MS device may comprise the ionization source configured for generating of molecular ions and for transferring of the molecular ions into the gas phase. The interface may further comprise at least one ion mobility module arranged between the ionization source and the mass filter. For example, the ion mobility module may be a high-field asymmetric waveform ion mobility spectrometry (FAIMS) module.

As used herein, the term "liquid chromatography (LC) device" is a broad term and is to be given its ordinary and customary meaning to a person of ordinary skill in the art and is not to be limited to a special or customized meaning. The term specifically may refer, without limitation, to an analytical module configured to separate one or more analytes of interest of a sample from other components of the sample for detection of the one or more analytes with the mass spectrometry device. The LC device may comprise at least one LC column. For example, the LC device may be a single-column LC device or a multi-column LC device having a plurality of LC columns. The LC column may have a stationary phase through which a mobile phase is pumped in order to separate and/or elute and/or transfer the analytes of interest. The liquid chromatography mass spectrometry device may further comprise a sample preparation station for the automated pre-treatment and preparation of samples each comprising at least one analyte of interest.

As used herein, the term "quality check" is a broad term and is to be given its ordinary and customary meaning to a person of ordinary skill in the art and is not to be limited to a special or customized meaning. The term specifically may refer, without limitation, to a process of distinguishing trustworthy and untrustworthy automated peak integration. The quality check may comprise determining information if a peak integration process was completed, i.e. if a calculated nominal signal is available, if the data quality was suitable for automated peak integration, and if the calculated nominal signal and readouts are trustworthy.

The term "quality" as used herein is a broad term and is to be given its ordinary and customary meaning to a person of ordinary skill in the art and is not to be limited to a special or customized meaning. The term specifically may refer, without limitation, to a measure for reliability of automated peak integration performed on data provided by the MS device and/or LC device. The classified quality may be used for distinguishing between acceptable and non-acceptable chromatographic and/or mass spectral data. Specifically, the quality may be classified as good (acceptable) for reliable automated peak integration and as bad (non-acceptable) for non-reliable automated peak integration. The classifying of quality may comprise discriminating between reliable and non-reliable automated peak integration. The quality may depend on several factors such as noise level, background, interferences that could not be resolved from the target peak, shifts in retention time, peak width, and presence or absence of internal standard signal.

The method comprises the following steps which, as an example, may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps which are not listed.

The method comprises the following steps:
a) providing processed chromatographic and/or mass spectral data obtained by at least one mass spectrometry device;
b) classifying quality of the chromatographic and/or mass spectral data by applying at least one trained machine learning model on the chromatographic and/or mass spectral data, wherein the trained machine learning model uses at least one regression model, wherein the trained machine learning model is trained on at least one training dataset comprising semi-synthetic chromatographic and/or mass spectral data, wherein the trained machine learning model is an analyte-specific trained machine learning model.

The term "processed chromatographic and/or mass spectral data" as used herein is a broad term and is to be given its ordinary and customary meaning to a person of ordinary skill in the art and is not to be limited to a special or customized meaning. The term specifically may refer, without limitation, to chromatographic and/or mass spectral data which have been subjected under automated peak integration. With respect to automated peak integration reference is made to WO 2021/023865 A1, the full content of which is included by reference.

The term "providing" as used herein is a broad term and is to be given its ordinary and customary meaning to a person of ordinary skill in the art and is not to be limited to a special or customized meaning. The term specifically may refer, without limitation, to a process of determining and/or generating and/or making available the processed chromatographic and/or mass spectral data, in particular by performing at least one measurement with the mass spectrometry device and subsequent processing of the data. Accordingly, the term "providing processed chromatographic and/or mass spectral data" as used herein is a broad term and is to be given its ordinary and customary meaning to a person of ordinary skill in the art and is not to be limited to a special or customized meaning. The term specifically may refer, without limitation, to retrieving, on particular receiving, data processed chromatographic and/or mass spectral data obtained from the mass spectrometry device and/or performing at least one measurement and processing with the mass spectrometry device thereby determining processed chromatographic and/or mass spectral data.

The term "classifying" as used herein is a broad term and is to be given its ordinary and customary meaning to a person of ordinary skill in the art and is not to be limited to a special or customized meaning. The term specifically may refer, without limitation, to a process of categorizing the chromatographic and/or mass spectral data into at least two categories, such as good or trustworthy for reliable automated peak integration and as bad or untrustworthy for non-reliable automated peak integration. The classifying is performed by applying at least one trained machine learning model. Thus, according to the present invention, the at least one machine learning model is used for predicting failure of peak integration and can provide for completely automated decision about result release. Therefore, the proposed method allows for removing the need for manual inspection of the data.

The term "machine learning model" as used herein is a broad term and is to be given its ordinary and customary meaning to a person of ordinary skill in the art and is not to be limited to a special or customized meaning. The term specifically may refer, without limitation, to a mathematical model which is trainable on at least one training dataset using machine learning, in particular deep learning or other form of artificial intelligence. The term "machine learning" as used herein is a broad term and is to be given its ordinary and customary meaning to a person of ordinary skill in the art and is not to be limited to a special or customized meaning. The term specifically may refer, without limitation, to a method of using artificial intelligence (AI) for automatically model building. The training may be performed using at least one machine-learning system. The term "machine-learning system" as used herein is a broad term and is to be given its ordinary and customary meaning to a person of ordinary skill in the art and is not to be limited to a special or customized meaning. The term specifically may refer, without limitation, to a system or unit comprising at least one processing unit such as a processor, microprocessor, or computer system configured for machine learning, in particular for executing a logic in a given algorithm. The machine-learning system may be configured for performing and/or executing at least one machine-learning algorithm, wherein the machine-learning algorithm is configured for building the trained machine learning model. The machine-learning system may be part of the mass spectrometry device and/or may be performed by an external processor such as by a cloud.

The trained machine learning model uses at least one regression model. The term "regression model" as used herein is a broad term and is to be given its ordinary and customary meaning to a person of ordinary skill in the art and is not to be limited to a special or customized meaning. The term specifically may refer, without limitation, to a prediction model configured for analyzing a relation between a target variable and independent variables in a dataset. The target variable for chromatographic data may be the continuous deviation from the expected result value. For mass spectral data the target variable may be a dichotomous information about whether the result is valid or not. The regression model may be at least one regression model selected from the group consisting of: a Random Forest, e.g. as described in Breiman L., Random forests, Machine Learning, 2001, 45(1): 5-32; a Gradient Boosting forest, as described in Friedman, J. H. (2001); a Greedy Function Approximation, e.g. as described in "A Gradient Boosting Machine", The Annals of Statistics, 29(5): 1189-1232; a Partial Least Squares, e.g. as described in Wold, H. (1985), Partial least squares, in Kotz, Samuel; Johnson, Norman L. (eds.), Encyclopedia of statistical sciences, 6. New York: Wiley. pp.581-591); a Lasso regression, e.g. as described in Tibshirani, R. (1996), Regression Shrinkage and Selection via the lasso, Journal of the Royal Statistical Society. Series B (methodological). Wiley.58(1): 267-88); a Logistic regression, e.g. as described in Hosmer, D., Lemeshow, S.: Applied logistic regression, Wiley, New York 2000; or a Bayesian regression e.g. as described in Box, G. E. P., Tiao, G. C. (1973), Bayesian Inference in Statistical Analysis. Wiley. For example, the regression model is selected from a Gradient Boosting forest or a Random Forest. For example, the regression model is a Gradient Boosting forest. For example, the regression model is a Random Forest.

The trained machine learning model is an analyte-specific trained machine learning model. For example, the analyte is at least one target substance selected from the group consisting of vitamin D, drugs of abuse, therapeutic drugs, hormones, and metabolites which shall be quantified from a sample. The term "sample" as used herein is a broad term and is to be given its ordinary and customary meaning to a person of ordinary skill in the art and is not to be limited to a special or customized meaning. The term specifically may refer, without limitation, to an arbitrary test sample such as a biological sample and/or an internal standard sample. The sample may comprise one or more analytes of interest. For example, the test sample may be selected from the group consisting of: a physiological fluid, including blood, serum, plasma, saliva, ocular lens fluid, cerebral spinal fluid, sweat, urine, milk, ascites fluid, mucous, synovial fluid, peritoneal fluid, amniotic fluid, tissue, cells or the like. The sample may be used directly as obtained from the respective source or may be subject of a pretreatment and/or sample preparation workflow. For example, the sample may be pretreated by adding an internal standard and/or by being diluted with another solution and/or by having being mixed with reagents or the like. For example, analytes of interest may be vitamin D, drugs of abuse, therapeutic drugs, hormones, and metabolites in general. The internal standard sample may be a sample comprising at least one internal standard substance with a known concentration. For further details with respect to the sample, reference is made e.g. to EP 3 425 369 A1, the full disclosure is included herewith by reference. Other analytes of interest are possible.

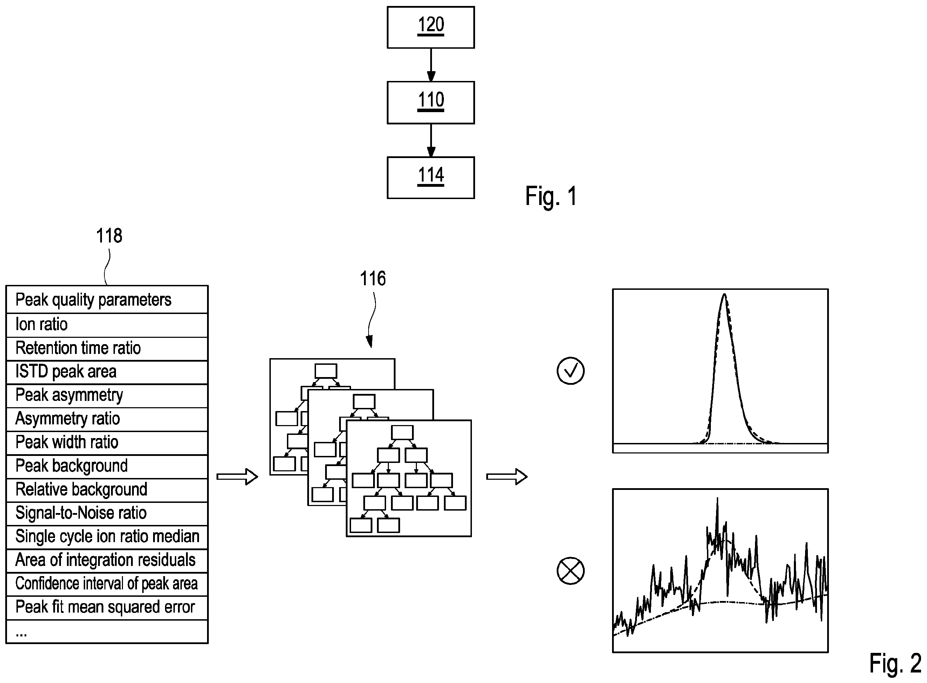

The machine learning model may use a feature set. The set of features considered informative for data and peak integration quality may comprise standard MS quality parameters like peak asymmetry or ion ratios, ratios of parameters between different transitions, e.g. retention time ratio between analyte quantifier and internal standard quantifier, features for assessing the quality of peak fit, e.g. residual ratio or peak fit uncertainty, and further engineered features describing noise, background and peak shape. The feature set may comprise at least one feature selected from the group consisting of: peak area, peak background, relative background, ion ratio, Q4 ratio, retention time ratio, peak asymmetry, asymmetry ratio, peak width, peak width ratio, area of integration residuals, confidence interval of peak area, mass shift, full width half maximum, signal to noise ratio, single cycle ratio median, single cycle ion ratio median, peak height, peak fit mean squared error, fit-intensity correlation, Earth Mover's Distance, and a deviation of any of the mentioned features mentioned when derived from the processed data, i.e. the integrated peak, and raw data, e.g. the difference between retention time of the fitted peak and the raw signal. The peak background may refer to an estimated background intensity in peak interval. The relative background may refer to a ratio of peak background and peak height. The ion ratio may refer to an area of analyte or internal standard (ISTD) quantifier to an area of analyte or ISTD qualifier area. The Q4 ratio may be given by Q4= (area of analyte quantifier/area of analyte qualifier)/(area of ISTD quantifier/area of ISTD qualifier). The retention time ratio may refer to one or more of RT_analyte_qualifier/RT_analyte_quantifier, RT_IStd_qualifier/RT_ISTD_quantifier or RT_analyte_quantifier/RT_ISTD_quantifier, with RT_analyte_qualifier being the retention time of the analyte qualifier, RT_analyte_quantifier being the retention time of the analyte quantifier, RT_ISTD_qualifier being the retention time of the ISTD qualifier, RT_ISTD_quantifier being the retention time of the ISTD quantifier. The peak asymmetry may be defined according to USP 40 guideline (also denoted as USP 40 herein), see: http://pharmacopeia.cn/v29240/usp29nf24s0_c621_viewall.html, in particular Fig. 2. The asymmetry ratio may refer to one or more of asymmetry_analyte_qualifier/asymmetry _analyte_quantifier, asymmetry_ISTD_qualifier/ asymmetry_ISTD_quantifier, or asymmetry _analyte_quantifier / asymmetry_ISTD_quantifier, wherein asymmetry_analyte_qualifier being the asymmetry of the peak of the analyte qualifier, asymmetry _analyte_quantifier being the asymmetry of the peak of the analyte quantifier, asymmetry_ISTD_qualifier being the asymmetry of the peak of the ISTD qualifier, asymmetry_ISTD_quantifier being the asymmetry of the peak of the ISTD quantifier. The peak width ratio may refer to one or more of width_analyte_qualifier/width_analyte_quantifier, width_ISTD_qualifier/width_ISTD_quantifier, or width_analyte_quantifier/width_ISTD_quantifier, wherein width_analyte_qualifier is the peak width of the analyte qualifier, width_analyte_quantifier is the peak width of the analyte quatifier, width _ISTD_qualifier is the peak width of the ISTD qualifier, width_ISTD _quantifier is the peak width of the ISTD quatifier. The signal to noise ratio may be defined in accordance to USP 40. The single cycle ratio median may refer to the median of a ratio of intensity of the analyte quantifier and intensity of the ISTD quantifier. The single cycle ion ratio median may refer to the median of one or more of a ratio of intensity of the analyte quantifier and intensity of the analyte qualifier or a ratio of intensity of the ISTD quantifier and intensity of the ISTD qualifier. The peak fit mean squared error may be given by mean[(smoothed intensity/area of fitted intensity/area)^2]. The fit-intensity correlation may refer to one or more of cor(smoothed intensity, fitted intensity) or cor(preprocessed intensity, fitted intensity). With respect to Earth Mover's Distance reference is made to e.g. https://en.wikipedia.org/wiki/Earth_mover%27s_distance. A rich set of features can be derived from chromatographic and/or mass spectral data and can be used for building the regression model. The training of the model may comprise determining a feature ranking. The training of the model may comprise selection the features.

The features of the feature set may be combined in machine learning models for predicting area ratio deviation as an equivalent for failure of peak integration. Regression models, e.g. Random Forest and Gradient Boosting, were found to show good performance with reasonable model complexity in terms of evaluation time and required disk space. Model parameters like type of algorithm, number of features, number and size of trees, may be tuned by means of resampling techniques.

For the Random Forest, it was found that the Random Forest has better performance with more features. For the Gradient Boosting forest it was found that the Gradient Boosting forest has better performance with less features. The feature selection may be performed such that features are chosen that are "stable" high-ranking over many data splits and/or models. The method may comprise feature engineering comprising evaluation of newly created features. For example, for the Gradient Boosting forest 50 features may be used with a minimum leave size 50 and 400 trees.

The regression model outcome in step b) may be a percent deviation of area ratio from the known true value. For classification at least one threshold may be used for generating a binary outcome for classification. In case the regression model outcome is greater than the threshold the data may be classified as bad, otherwise, in case the regression model outcome is below the threshold as good. For example, the threshold may be 10%.

The method may comprise step c), at least one training step. The training step may comprise training the machine learning model based on the training dataset.

The term "training" as used herein is a broad term and is to be given its ordinary and customary meaning to a person of ordinary skill in the art and is not to be limited to a special or customized meaning. The term specifically may refer, without limitation, to a process of building the trained machine learning model, in particular determining parameters, in particular weights, of the model. The training may comprise determining and/or updating parameters of the model. The trained machine learning model may be at least partially data driven. As used herein, the term "at least partially data-driven model" is a broad term and is to be given its ordinary and customary meaning to a person of ordinary skill in the art and is not to be limited to a special or customized meaning. The term specifically may refer, without limitation, to the fact that the model comprises data-driven model parts and other model parts such as based on physico-chemical laws. The training may be performed on historical and/or semi-synthetic chromatographic and/or mass spectral data. The training may comprise retraining a trained model, e.g. after obtaining additional chromatographic and/or mass spectral data such as during operating the MS and/or LC-MS device.

The trained machine learning model is trained on at least one training dataset comprising semi-synthetic chromatographic and/or mass spectral data. The training dataset may be generated by manual classification of the semi-synthetic chromatographic and/or mass spectral data into two categories.

The training step may comprise training of machine learning models for different analytes. The training step may be performed during assay development for a plurality of different assays, wherein the trained machine learning model for different assays are stored in at least one databank. The databank may comprise data processing configuration files, enabling automated flagging of peak integration results on the instrument. The method may comprise at least one selection step performed before step b), wherein in the selection step the one trained machine learning model is selected from the trained machine learning models which was trained for the analyte used for obtaining the provided chromatographic and/or mass spectral data.

The trained machine learning models may be suitable for different analytes with similar chromatography. The training step may comprises training of machine learning models for different chromatography types. For different chromatography types separate models may be used, e.g. considering standard chromatography where peak fit can be applied, non-standard chromatography where boundary detection needs to be applied and cases where no internal standard is available that has exact same retention time as analyte and existence of an offset in retention time between analyte and ISTD.

The terms "historical chromatographic data" and "mass spectral data" as used herein are broad terms and are to be given their ordinary and customary meaning to a person of ordinary skill in the art and are not to be limited to a special or customized meaning. The terms specifically may refer, without limitation, to measurement results obtained by using the at least one mass spectrometry device. The historical data may be real data. The historical chromatographic and/or mass spectral data may comprise data from different instruments, measuring several analytes, and with different scenarios. An example for a historical training dataset may comprise of around 500 chromatographic measurements, including five different analytes, measured on two instruments from one system and three instruments from an-other system during a time period of 11 weeks.

The training dataset comprises semi-synthetic chromatographic and/or mass spectral data, also denoted as semi-synthetic dataset. The term "semi-synthetic chromatographic and/or mass spectral data" as used herein is a broad term and is to be given its ordinary and customary meaning to a person of ordinary skill in the art and is not to be limited to a special or customized meaning. The term specifically may refer, without limitation, to chromatographic and/or mass spectral data simulated based on historical chromatographic and/or mass spectral data. The semi-synthetic chromatographic and/or mass spectral data may be generated by applying and/or simulating defined disturbances to real measured chromatographic and/or mass spectral data. The semi-synthetic chromatographic and/or mass spectral data may comprise modified historical chromatographic and/or mass spectral data. The historical chromatographic and/or mass spectral data may be modified by one or more of introducing at least one interference, introducing background, introducing at least one shift in retention time, modifying peak width, replacing an internal standard signal by a chromatogram from a double blank sample. The semi-synthetic simulation approach combines the benefit in simulation studies of knowing the truth with providing datasets with real world properties. Using simulated datasets for model training has several advantages over real data such as objective definition of true status of a measurement, rare cases and "grey zones" can be explored, scalable in terms of sample size. In order to resemble real data as close as possible, a semi-synthetic approach is adopted, where real measurements are modified in a controlled way.

The semi-synthetic dataset may be generated as follows. Real chromatograms with clear peaks and reliable integration results (manually curated) may be selected and subsequently modified in order to resemble challenging situations for peak integration. The generating of the semi-synthetic dataset may comprise considering one or more of the following situations interferences, background, shifts in retention time, peak width and missing of internal standard signal. For example, for considering interferences, the fitted intensities for the real internal standard peak are added to the raw intensities next to the analyte peak. By the distance between the peaks different resolutions can be explored. The height of the artificial interference peak can be scaled up or down in order to simulate different relative peak heights between the peak of interest and the interference. For example, for considering background, for simulating varying background signal at first a step function is generated, where step heights are drawn from a uniform distribution. By the maximal step height the magnitude of the simulated background can be controlled. Next, a background fit is applied to the step function and the resulting curve is added to the real chromatogram intensities. The curvature parameter in the background fit allows manipulating the curvature of the artificial background. For example, for considering shifts in retention time, variability in retention time can easily be simulated by shifting the real signal along the time scale. For example, for considering peak width, the peak fit is rescaled by changing respective parameters of the fitting function. Intensities are rescaled in order to maintain the area under the peak. Rescaled noise from the original data is then added to the new peak fit. For example, for considering missing of internal standard signal, the chromatogram for the internal standard is replaced by a chromatogram from a double blank sample.

Simulated data, i.e. the semi-synthetic chromatographic and/or mass spectral data, may have much higher fraction of bad cases and much higher fraction of borderline cases than real data, i.e. the historical synthetic chromatographic and/or mass spectral data. Better performance of the model can be achieved when including part of the real data for training. Other part of the real data may be used for testing the trained model. The real data may be manually labeled true datasets.

The method may comprise at least one test step, wherein the test step comprises testing the trained model. The test step may comprise testing the trained model on at least one test dataset. The test step may comprise obtaining performance characteristics of the trained model, e.g. accuracy, false-positive-rate and false-negative-rate. For evaluation of prediction performance, testing the models may be performed using simulated data and/or on real data, in particular manually labeled true datasets. The test dataset may comprise simulated data and/or real data.

For example, the training data set may comprise a first semi-synthetic dataset, such as comprising 7062 measurements, and the test dataset may comprise a second semi-synthetic dataset, such as of 3638 measurements.

For example, the training dataset may comprise both semi-synthetic datasets and part of real data which were labelled as "good". The training dataset may comprise another part of real data labelled as "good" and real data labelled as "bad".

An example machine learning model for analytes with standard peak shapes (e.g. Testosterone) was trained on semi-synthetic datasets. The machine learning model was trained on 241 manually labeled real measurements retrieved from ten sample runs on different instruments. 121 were manually labelled as bad and 120 were manually labelled as good. The quality check of the peak integration using the trained machine learning model classified all 120-"good" measurements correctly. 5 out of the 121-"bad" measurement were classified as "good" by the trained machine learning model. An accuracy of 0.9793, a false-positive-rate of 0.0000 and a false-negative-rate of 0.0413 was determined.

The trained machine learning models may then be deployed for predicting the quality status of new measurements, as performed in step b). The trained machine learning models for different analytes and/or different chromatographic types may be transferred to data processing configuration files. The data processing configuration files may be stored in at least one data storage of the mass spectrometry device. This may allow enabling automated flagging of peak integration results on the mass spectrometry device.

The method may comprise assigning a flag to the chromatographic and/or mass spectral data as acceptable or non-acceptable based on the classified quality. A measure for how much the data are affected by the introduced "disturbing factors" may be the percent deviation of the area ratio results, as calculated for the created semi-synthetic data, from the area ratios in the original real dataset. The area ratio deviation represents the continuous outcome for the regression models. A gold standard for error handling can then be defined by flagging measurements with e.g. more than 10% area ratio deviation. The binary flag serves as true status in the evaluation of the prediction performance in terms of accuracy and false positive/negative rates. The method may comprise providing at least one information depending on the flag of the chromatographic and/or mass spectral data to a user via at least one user-interface. The term "user interface" as used herein is a broad term and is to be given its ordinary and customary meaning to a person of ordinary skill in the art and is not to be limited to a special or customized meaning. The term may refer, without limitation, to an element or unit which is configured for interacting with its environment, such as for the purpose of unidirectionally or bidirectionally exchanging information, such as for exchange of one or more of data or commands. For example, the user interface may be configured to share information with a user and to receive information by the user. The user interface may be a feature to interact visually with a user, such as a display, or a feature to interact acoustically with the user. The user interface, as an example, may comprise one or more of: a graphical user interface; a data interface, such as a wireless and/or a wire-bound data interface.

In the invention according to claim 12, a test system configured for performing the method according to the present invention is proposed. For definitions of the features of the test system and for optional features of the test system, reference may be made to one or more of the embodiments of the method as disclosed above or as disclosed in further detail below. The test system may be part of the mass spectrometry device.

The test system comprises
- at least one communication interface configured for receiving processed chromatographic and/or mass spectral data obtained by at least one mass spectrometry device,
- at least one processing device configured for classifying quality of the chromatographic and/or mass spectral data by applying at least one trained machine learning model on the chromatographic and/or mass spectral data, wherein the trained machine learning model uses at least one regression model, wherein the trained machine learning model is trained on at least one training dataset comprising semi-synthetic chromatographic and/or mass spectral data, wherein the trained machine learning model is an analyte-specific trained machine learning model;
- at least one user interface configured for providing information about the classified quality to a user.

The test system may be configured to carry out steps a) to b) and optionally step c) of the method according to the present invention.

The term "communication interface" as used herein is a broad term and is to be given its ordinary and customary meaning to a person of ordinary skill in the art and is not to be limited to a special or customized meaning. The term specifically may refer, without limitation, to an item or element forming a boundary configured for transferring information. In particular, the communication interface may be configured for transferring information from a computational device, e.g. a computer, such as to send or output information, e.g. onto another device. Additionally or alternatively, the communication interface may be configured for transferring information onto a computational device, e.g. onto a computer, such as to receive information. The communication interface may specifically provide means for transferring or exchanging information. In particular, the communication interface may provide a data transfer connection, e.g. Bluetooth, NFC, inductive coupling or the like. As an ex-ample, the communication interface may be or may comprise at least one port comprising one or more of a network or internet port, a USB-port and a disk drive. The communication interface may be at least one web interface.

Further disclosed and proposed herein is a computer program including computer-executable instructions for performing the method according to the present invention in one or more of the embodiments enclosed herein when the program is executed on a computer or computer network, in particular of the test system. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps a) to b) and optionally step c) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network, in particular of the test system. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network, in particular of the test system. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

Further optional features and embodiments will be disclosed in more detail in the subsequent description of embodiments, preferably in conjunction with the dependent claims.

In the Figures:
- Figure 1: shows an embodiment of a method for automated quality check of chromatographic and/or mass spectral data according to the present invention;
- Figure 2: shows a sketch of development and deployment of a trained machine learning model;
- Figures 3a to e: show different simulation scenarios;
- Figure 4: shows a definition of regression model outcome by percent deviation from original area ratio;
- Figure 5: shows an embodiment of a mass spectrometry device comprises a test system according to the present invention; and
- Figure 6: shows an example for model optimization.

### Detailed description of the embodiments

Figure 1 shows a flow diagram of a computer implemented method for automated quality check of chromatographic and/or mass spectral data. The method comprises the following steps:
a) (denoted with reference number 110) providing processed chromatographic and/or mass spectral data obtained by at least one mass spectrometry device 112;
b) (denoted with reference number 114) classifying quality of the chromatographic and/or mass spectral data by applying at least one trained machine learning model on the chromatographic and/or mass spectral data, wherein the trained machine learning model uses at least one regression model, wherein the trained machine learning model is trained on at least one training dataset comprising semi-synthetic chromatographic and/or mass spectral data, wherein the trained machine learning model is an analyte-specific trained machine learning model.

The mass spectral data may be data obtained by using the at least one mass spectrometry device 112, in particular to at least one mass spectrum. The chromatographic data may be at least one chromatogram.

The quality check may be a process of distinguishing trustworthy and untrustworthy automated peak integration. The quality check may comprise determining information if a raw data reduction process was completed, if the data quality was suitable for automated peak integration, and if the calculated nominal signal and readouts are trustworthy. The quality may be a measure for reliability of automated peak integration performed on data provided by the MS device and/or LC device 112. The classified quality may be used for distinguishing between acceptable and non-acceptable chromatographic and/or mass spectral data. Specifically, the quality may be classified as good (acceptable) for reliable automated peak integration and as bad (non-acceptable) for non-reliable automated peak integration. The classifying of quality may comprise discriminating between reliable and non-reliable automated peak integration. The quality may depend on several factors such as noise level, background, interferences, shifts in retention time, peak width, and presence or absence of internal standard signal.

The processed chromatographic and/or mass spectral data may be chromatographic and/or mass spectral data which have been subjected under automated peak integration. With respect to automated peak integration reference is made to WO 2021/023865 A1, the full content of which is included by reference.

The providing in step a) 110 may comprise determining and/or generating and/or making available the processed chromatographic and/or mass spectral data, in particular by performing at least one measurement with the mass spectrometry device and subsequent processing of the data. The providing of processed chromatographic and/or mass spectral data may comprise retrieving, on particular receiving, data processed chromatographic and/or mass spectral data obtained from the mass spectrometry device 112 and/or performing at least one measurement and processing with the mass spectrometry device 112 thereby determining processed chromatographic and/or mass spectral data.

The classifying in step b) 114) may comprise categorizing the chromatographic and/or mass spectral data into at least two categories, such as good or trustworthy for reliable automated peak integration and as bad or untrustworthy for non-reliable automated peak integration. The classifying is performed by applying at least one trained machine learning model. Thus, according to the present invention, the at least one machine learning model is used for predicting failure of peak integration and can provide for completely automated decision about result release. Therefore, the proposed method allows for removing the need for manual inspection of the data.

The trained machine learning model uses at least one regression model 116. The regression model 116 may be a prediction model configured for analyzing a relation between a target variable and independent variables in a dataset. The target variable for chromatographic data may be the continuous deviation from the expected result value. For mass spectral data the target variable may be a dichotomous information about whether the result is valid or not. The regression model 116 may be at least one regression model selected from the group consisting of: a Random Forest, e.g. as described in Breiman L., Random forests, Machine Learning, 2001, 45(1): 5-32; a Gradient Boosting forest, as described in Friedman, J. H. (2001); a Greedy Function Approximation, e.g. as described in "A Gradient Boosting Machine", The Annals of Statistics, 29(5): 1189-1232; a Partial Least Squares, e.g. as described in Wold, H. (1985), Partial least squares, in Kotz, Samuel; Johnson, Norman L. (eds.), Encyclopedia of statistical sciences, 6. New York: Wiley. pp.581-591); a Lasso regression, e.g. as described in Tibshirani, R. (1996), Regression Shrinkage and Selection via the lasso, Journal of the Royal Statistical Society. Series B (methodological). Wiley.58(1): 267-88); a Logistic regression, e.g. as described in Hosmer, D., Lemeshow, S.: Applied logistic regression, Wiley, New York 2000; or a Bayesian regression e.g. as described in Box, G. E. P., Tiao, G. C. (1973), Bayesian Inference in Statistical Analysis. Wiley. For example, the regression model 116 is selected from a Gradient Boosting forest or a Random Forest. For example, the regression model 116 is a Gradient Boosting forest. For example, the regression model 116 is a Random Forest.

The trained machine learning model is an analyte-specific trained machine learning model. For example, the analyte is at least one target substance selected from the group consisting of vitamin D, drugs of abuse, therapeutic drugs, hormones, and metabolites which shall be quantified from a sample. The sample may be an arbitrary test sample such as a biological sample and/or an internal standard sample. The sample may comprise one or more analytes of interest. For example, the test sample may be selected from the group consisting of: a physiological fluid, including blood, serum, plasma, saliva, ocular lens fluid, cerebral spinal fluid, sweat, urine, milk, ascites fluid, mucous, synovial fluid, peritoneal fluid, amniotic fluid, tissue, cells or the like. The sample may be used directly as obtained from the respective source or may be subject of a pretreatment and/or sample preparation workflow. For example, the sample may be pretreated by adding an internal standard and/or by being diluted with another solution and/or by having being mixed with reagents or the like. For example, analytes of interest may be vitamin D, drugs of abuse, therapeutic drugs, hormones, and metabolites in general. The internal standard sample may be a sample comprising at least one internal standard substance with a known concentration. For further details with respect to the sample, reference is made e.g. to EP 3 425 369 A1, the full disclosure is included herewith by reference. Other analytes of interest are possible.

The machine learning model may use a feature set 118. The feature set 118 considered informative for data and peak integration quality may comprise standard MS quality parameters like peak asymmetry or ion ratios, ratios of parameters between different transitions, e.g. retention time ratio between analyte quantifier and internal standard quantifier, features for assessing the quality of peak fit, e.g. residual ratio or peak fit uncertainty, and further engineered features describing noise, background and peak shape. The feature set 118 may comprise at least one feature selected from the group consisting of: peak area, peak background, relative background, ion ratio, Q4 ratio, retention time ratio, peak asymmetry, asymmetry ratio, peak width, peak width ratio, area of integration residuals, confidence interval of peak area, mass shift, full width half maximum, signal to noise ratio, single cycle ratio median, single cycle ion ratio median, peak height, peak fit mean squared error, fit-intensity correlation, Earth Mover's Distance, and a deviation of any of the mentioned features mentioned when derived from the processed data, i.e. the integrated peak, and raw data, e.g. the difference between retention time of the fitted peak and the raw signal. The peak background may refer to an estimated background intensity in peak interval. The relative background may refer to a ratio of peak background and peak height. The ion ratio may refer to an area of analyte or internal standard (ISTD) quantifier to an area of analyte or ISTD qualifier area. The Q4 ratio may be given by Q4= (area of analyte quantifier/area of analyte qualifier)/(area of ISTD quantifier/area of ISTD qualifier). The retention time ratio may refer to one or more of RT_analyte_qualifier/RT_analyte_quantifier, RT_ISTD_qualifier/RT_ISTD_quantifier or RT_analyte_quantifier/RT_ISTD_quantifier, with RT_analyte_qualifier being the retention time of the analyte qualifier, RT_analyte_quantifier being the retention time of the analyte quantifier, RT_ISTD_qualifier being the retention time of the ISTD qualifier, RT_ISTD_quantifier being the retention time of the ISTD quantifier. The peak asymmetry may be defined according to USP 40. The asymmetry ratio may refer to one or more of asymmetry_analyte_qualifier/asymmetry _analyte_quantifier, asymmetry_ISTD_qualifier/ asymmetry_ISTD_quantifier, or asymmetry _analyte_quantifier / asymmetry_ISTD_quantifier, wherein asymmetry_analyte_qualifier being the asymmetry of the peak of the analyte qualifier, asymmetry _analyte_quantifier being the asymmetry of the peak of the analyte quantifier, asymmetry_ISTD_qualifier being the asymmetry of the peak of the ISTD qualifier, asymmetry_ISTD_quantifier being the asymmetry of the peak of the ISTD quantifier. The peak width ratio may refer to one or more of width_analyte_qualifier/width_analyte_quantifier, width_ISTD_qualifier/width_ISTD_quantifier, or width_analyte_quantifier/width_ISTD_quantifier, wherein width_analyte_qualifier is the peak width of the analyte qualifier, width_analyte_quantifier is the peak width of the analyte quatifier, width _ISTD_qualifier is the peak width of the ISTD qualifier, width_ ISTD _quantifier is the peak width of the ISTD quatifier. The signal to noise ratio may be defined in accordance to USP 40. The single cycle ratio median may refer to the median of a ratio of intensity of the analyte quantifier and intensity of the ISTD quantifier. The single cycle ion ratio median may refer to the median of one or more of a ratio of intensity of the analyte quantifier and intensity of the analyte qualifier or a ratio of intensity of the ISTD quantifier and intensity of the ISTD qualifier. The peak fit mean squared error may be given by mean[(smoothed intensity/area of fitted intensity/area)^2]. The fit-intensity correlation may refer to one or more of cor(smoothed intensity, fitted intensity) or cor(preprocessed intensity, fitted intensity). With respect to Earth Mover's Distance reference is made to e.g. https://en.wikipedia.org/wiki/Earth_mover%27s_distance. A rich set of features can be derived from chromatographic and/or mass spectral data and can be used for building the regression model. The training of the model may comprise determining a feature ranking. The training of the model may comprise selection the features.

Figure 2 shows a sketch of development and deployment of a trained machine learning model, in this case a regression model 116. The features of the feature set 118 may be combined in regression models 116 for predicting area ratio deviation as an equivalent for failure of peak integration. The trained regression models may then be deployed for predicting the quality status of new measurements, as performed in step b) 114. In Figure 2 from left to right the features set 118, exemplary regression models 116 and application of the trained regression model 116 on exemplary processed chromatographic and/or mass spectral data is shown. In the upper right plot the processed chromatographic and/or mass spectral data is classified in step b) as good and in the lower right plot as bad.

Regression models 116, e.g. Random Forest and Gradient Boosting, were found to show good performance with reasonable model complexity in terms of evaluation time and required disk space. Model parameters like type of algorithm, number of features, number and size of trees, may be tuned by means of resampling techniques.

For the Random Forest, it was found that the Random Forest has better performance with more features. For the Gradient Boosting forest it was found that the Gradient Boosting forest has better performance with less features. The feature selection may be performed such that features are chosen that are "stable" high-ranking over many data splits and/or models. The method may comprise feature engineering comprising evaluation of newly created features. For example, for the Gradient Boosting forest 50 features may be used with a minimum leave size 50 and 400 trees.

The method may comprise step c) 120, at least one training step. The training step may comprise training the machine learning model based on the training dataset.

The training may comprise a process of building the trained machine learning model, in particular determining parameters, in particular weights, of the model. The training may comprise determining and/or updating parameters of the model. The training may be performed on historical and/or semi-synthetic chromatographic and/or mass spectral data. The training may comprise retraining a trained model, e.g. after obtaining additional chromatographic and/or mass spectral data such as during operating the MS and/or LC-MS device.

The training step 120 may comprises training of machine learning models for different analytes. The training step 120 may be performed during assay development for a plurality of different assays, wherein the trained machine learning model for different assays are stored in at least one databank. The databank may comprise data processing configuration files, enabling automated flagging of peak integration results on the instrument. The method may comprise at least one selection step performed before step b), e.g. as part of step c), wherein in the selection step the one trained machine learning model is selected from the trained machine learning models which was trained for the analyte used for obtaining the provided chromatographic and/or mass spectral data.

The trained machine learning models may be suitable for different analytes with similar chromatography. The training step may comprises training of machine learning models for different chromatography types. For different chromatography types separate models may be used, e.g. considering standard chromatography where peak fit can be applied, non-standard chromatography where boundary detection needs to be applied and cases where no internal standard is available that has exact same retention time as analyte and existence of an offset in retention time between analyte and ISTD.

The historical chromatographic and/or mass spectral data may comprise measurement results obtained by using the at least one mass spectrometry device. The historical data may be real data. The historical chromatographic and/or mass spectral data may comprise data from different instruments, measuring several analytes, and with different scenarios. An example for a historical training dataset may comprise of around 500 chromatographic measurements, including five different analytes, measured on two instruments from one system and three instruments from an-other system during a time period of 11 weeks.

The training dataset comprises semi-synthetic chromatographic and/or mass spectral data, also denoted as semi-synthetic dataset. The semi-synthetic chromatographic and/or mass spectral data may be simulated based on historical chromatographic and/or mass spectral data. The semi-synthetic chromatographic and/or mass spectral data may be generated by applying and/or simulating defined disturbances to real measured chromatographic and/or mass spectral data. The semi-synthetic chromatographic and/or mass spectral data may comprise modified historical chromatographic and/or mass spectral data. The historical chromatographic and/or mass spectral data may be modified by one or more of introducing at least one interference, introducing background, introducing at least one shift in retention time, modifying peak width, replacing an internal standard signal by a chromatogram from a double blank sample. The semi-synthetic simulation approach combines the benefit in simulation studies of knowing the truth with providing datasets with real world properties. Using simulated datasets for model training has several advantages over real data such as objective definition of true status of a measurement, rare cases and "grey zones" can be explored, scalable in terms of sample size. In order to resemble real data as close as possible, a semi-synthetic approach is adopted, where real measurements are modified in a controlled way.

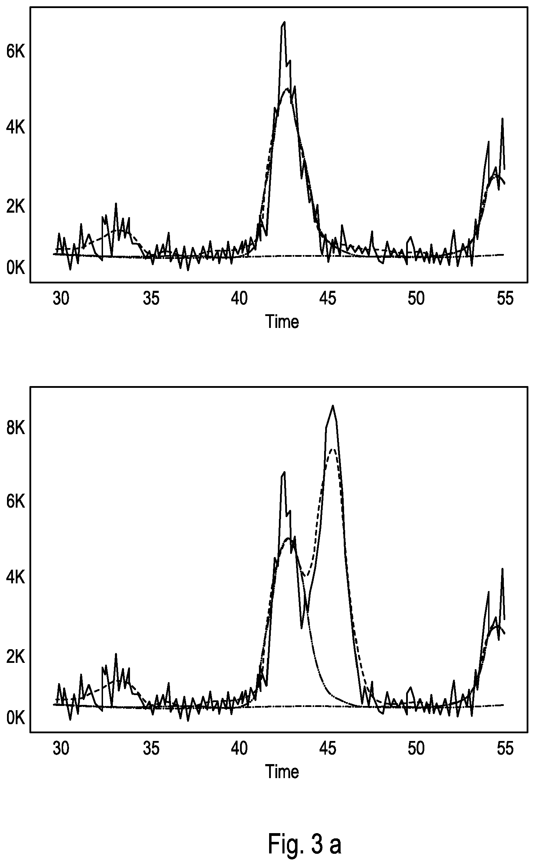

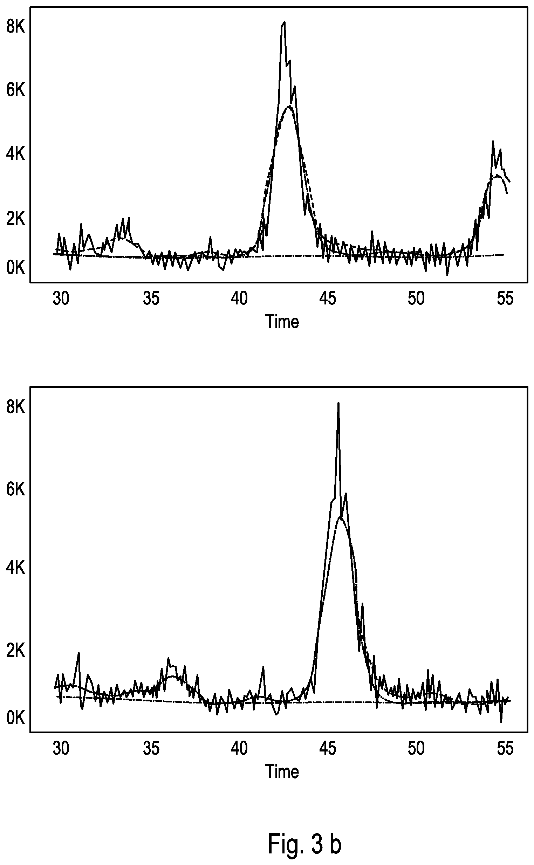

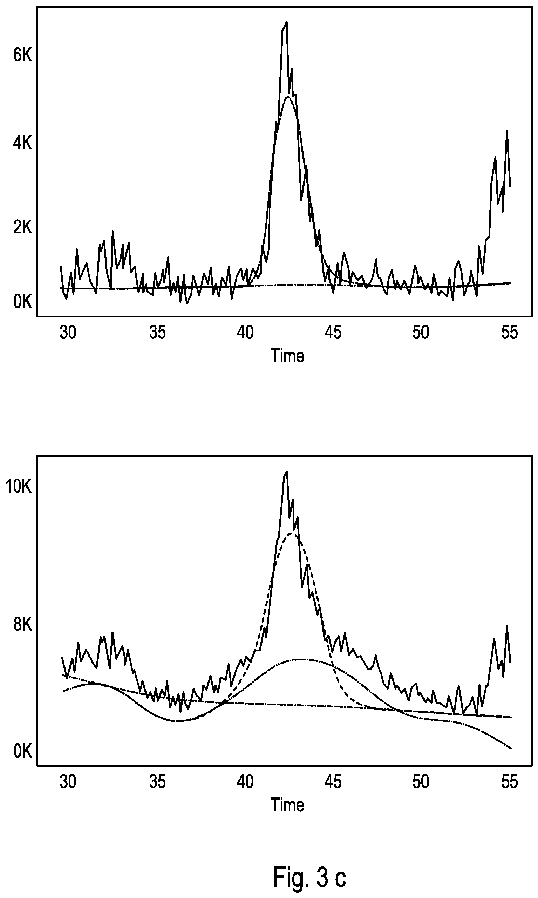

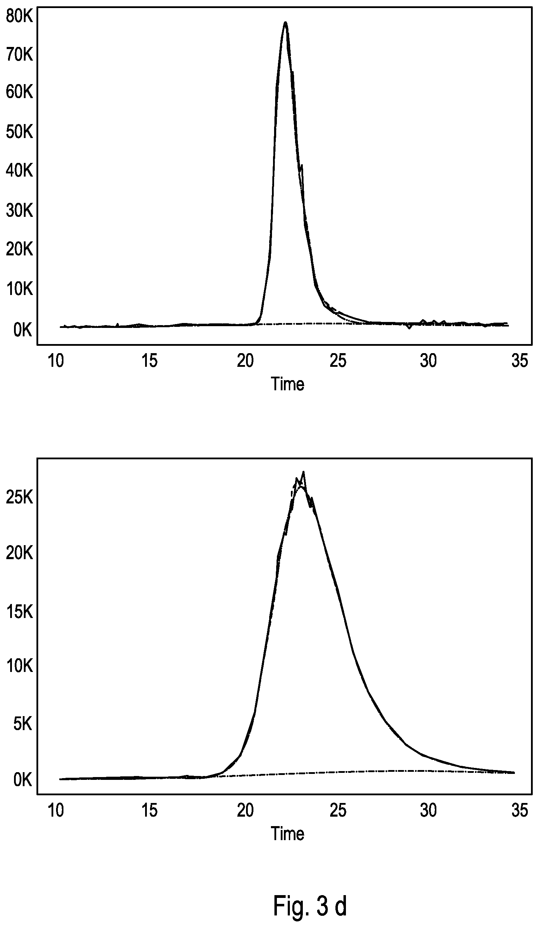

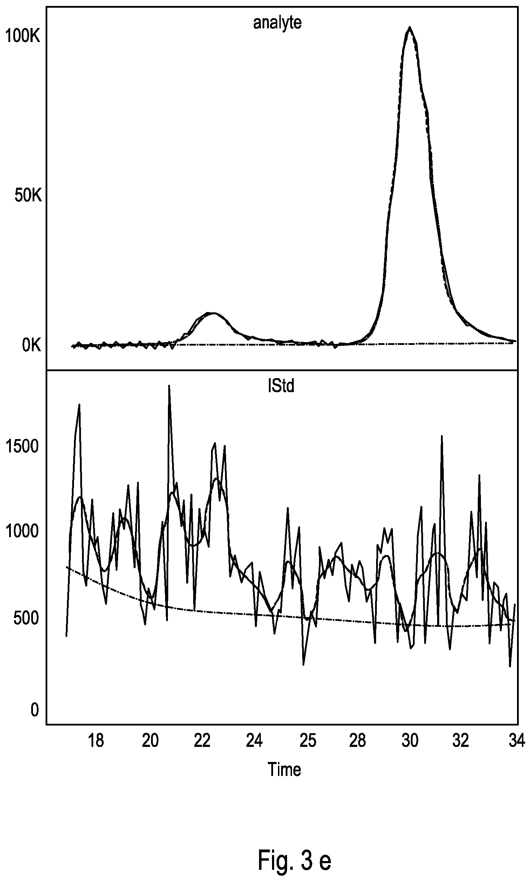

Figure 3, a to e, show different simulation scenarios. The upper row shows the real data and the lower row the real data plus the introduced disturbance. In Figure 3a at least one interference was introduced by varying transition, position, resolution and relative height.

In Figure 3b shift in retention time was introduced by varying the shift. In Figure 3c background was introduced by varying height and curvature. In Figure 3d the peak width was changed by varying the scale factor. In Figure 3e a missing ISTD signal was simulated.

The semi-synthetic dataset may be generated as follows. Real chromatograms with clear peaks and reliable integration results (manually curated) may be selected and subsequently modified in order to resemble challenging situations for peak integration. The generating of the semi-synthetic dataset may comprise considering one or more of the following situations interferences, background, shifts in retention time, peak width and missing of internal standard signal. For example, for considering interferences, the fitted intensities for the real internal standard peak are added to the raw intensities next to the analyte peak. By the distance between the peaks different resolutions can be explored. The height of the artificial interference peak can be scaled up or down in order to simulate different relative peak heights between the peak of interest and the interference. For example, for considering background, for simulating varying background signal at first a step function is generated, where step heights are drawn from a uniform distribution. By the maximal step height the magnitude of the simulated background can be controlled. Next, a background fit is applied to the step function and the resulting curve is added to the real chromatogram intensities. The curvature parameter in the background fit allows manipulating the curvature of the artificial background. For example, for considering shifts in retention time, variability in retention time can easily be simulated by shifting the real signal along the time scale. For example, for considering peak width, the peak fit is rescaled by changing respective parameters of the fitting function. Intensities are rescaled in order to maintain the area under the peak. Rescaled noise from the original data is then added to the new peak fit. For example, for considering missing of internal standard signal, the chromatogram for the internal standard is replaced by a chromatogram from a double blank sample.

Simulated data, i.e. the semi-synthetic chromatographic and/or mass spectral data, may have much higher fraction of bad cases and much higher fraction of borderline cases than real data, i.e. the historical synthetic chromatographic and/or mass spectral data. Better performance of the model can be achieved when including part of the real data for training. Other part of the real data may be used for testing the trained model. The real data may be manually labeled true datasets.

The method may comprise at least one test step, wherein the test step comprises testing the trained model. The test step may comprise testing the trained model on at least one test dataset. The test step may comprise obtaining performance characteristics of the trained model, e.g. accuracy, false-positive-rate and false-negative-rate. For evaluation of prediction performance, testing the models may be performed using simulated data and/or on real data, in particular manually labeled true datasets. The test dataset may comprise simulated data and/or real data.

An example machine learning model for analytes with standard peak shapes (e.g. Testosterone) was trained on semi-synthetic datasets. The machine learning model was trained on 241 manually labeled real measurements retrieved from ten sample runs on different instruments. 121 were manually labelled as bad and 120 were manually labelled as good. The quality check of the peak integration using the trained machine learning model classified all 120-"good" measurements correctly. 5 out of the 121-"bad" measurement were classified as "good" by the trained machine learning model. An accuracy of 0.9793, a false-positive-rate of 0.0000 and a false-negative-rate of 0.0413 was determined.

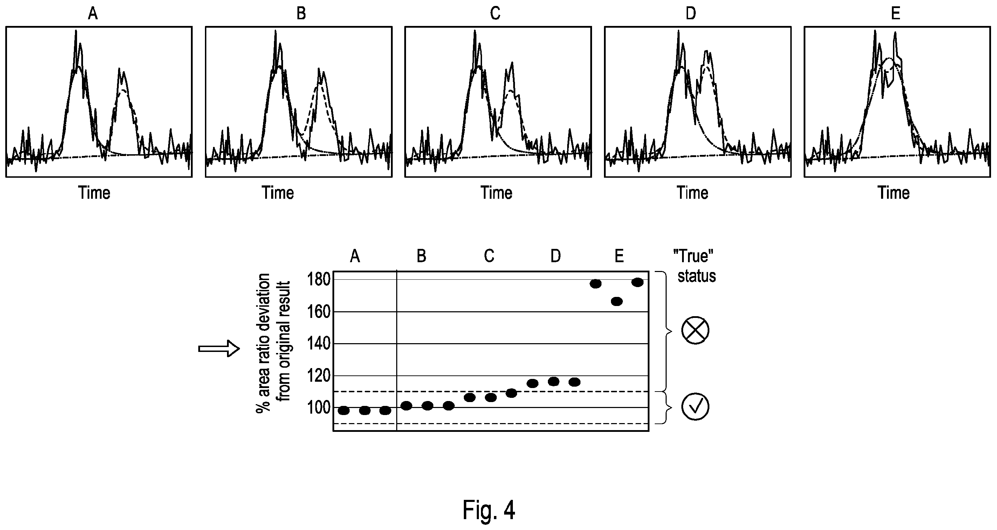

A measure for how much the data are affected by the introduced "disturbing factors" may be the percent deviation of the area ratio results, as calculated for the created semi-synthetic data, from the area ratios in the original real dataset. The area ratio deviation represents the continuous outcome for the regression models. A gold standard for error handling can then be defined by flagging measurements in view of threshold, e.g. of more than 10% area ratio deviation. The binary flag serves as true status in the evaluation of the prediction performance in terms of accuracy and false positive/negative rates. Figure 4 shows a definition of regression model outcome by percent deviation from original area ratio. The upper row of Figure 4 shows five integrated peaks, denoted from A to E. The lower plot of Figure 4 shows for A to E the percent area ratio deviation as continuous outcome for prediction. In addition, a threshold of > 10% is depicted.

The trained machine learning models may then be deployed for predicting the quality status of new measurements, as performed in step b). The trained machine learning models for different analytes and/or different chromatographic types may be transferred to data processing configuration files. The data processing configuration files may be stored in at least one data storage of the mass spectrometry device 112. This may allow enabling automated flagging of peak integration results on the mass spectrometry device 112.

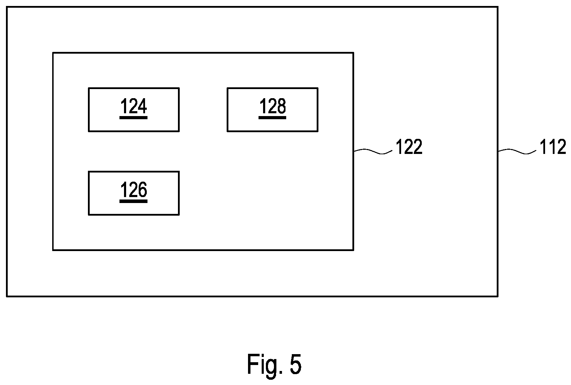

Figure 5 shows a mass spectrometry device 112 comprising a test system 122. The test system 122 comprises
- at least one communication interface 124 configured for receiving processed chromatographic and/or mass spectral data obtained by at least one mass spectrometry device 112,
- at least one processing device 126 configured for classifying quality of the chromatographic and/or mass spectral data by applying at least one trained machine learning model on the chromatographic and/or mass spectral data, wherein the trained machine learning model uses at least one regression model 116, wherein the trained machine learning model is trained on at least one training dataset comprising historical and/or semi-synthetic chromatographic and/or mass spectral data, wherein the trained machine learning model is an analyte-specific trained machine learning model;
- at least one user interface 128 configured for providing information about the classified quality to a user.

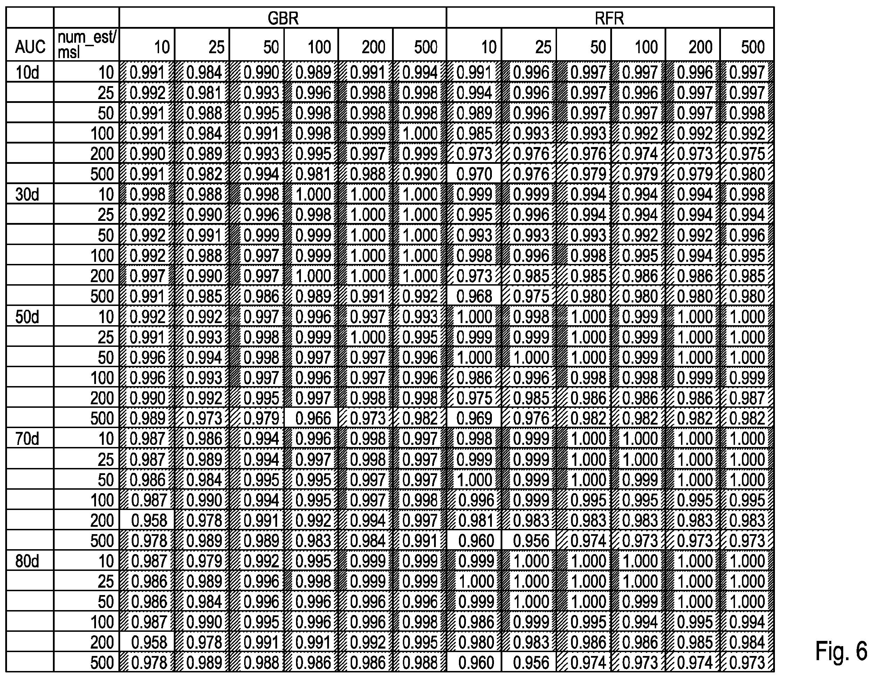

Figure 6 shows an example for model optimization. The table comprises area under the curve (AUC) values derived by data resampling for different model settings: left block Gradient Boosting Forests (GBR), right block Random Forest Regression (RFR), number of estimators ('num_est' = number of trees) in the columns, number of dimensions ('d' = number of features) and minimum leaf size ('msl' = tree size) in the rows. Darker color and larger values indicate better model performance.

### List of reference numbers

- 110: step a)
- 112: mass spectrometry device
- 114: step b)
- 116: regression model
- 118: feature set
- 120: step c)
- 122: test system
- 124: communication interface
- 126: processing device
- 128: user interface

## Claims

1. A computer implemented method for automated quality check of chromatographic and/or mass spectral data, wherein the method comprises the following steps:
a) (110) providing processed chromatographic and/or mass spectral data obtained by at least one mass spectrometry device (112);
b) (114) classifying quality of the chromatographic and/or mass spectral data by applying at least one trained machine learning model on the chromatographic and/or mass spectral data, wherein the trained machine learning model uses at least one regression model (116), wherein the trained machine learning model is an analyte-specific trained machine learning model,
**characterized in that** the trained machine learning model is trained on at least one training dataset comprising semi-synthetic chromatographic and/or mass spectral data.

2. The method according to the preceding claim, wherein the analyte is at least one target substance selected from the group consisting of vitamin D, drugs of abuse, therapeutic drugs, hormones, and metabolites which shall be quantified from a sample.

3. The method according to any one of the preceding claims, wherein the regression model (116) is at least one regression model selected from the group consisting of a Random Forest; a Gradient Boosting forest; a Partial Least Squares, a Lasso regression; a Logistic regression; a Bayesian regression.

4. The method according to any one of the preceding claims, wherein the method is performed completely automatic.

5. The method according to any one of the preceding claims, wherein the classified quality is used for distinguishing between acceptable and non-acceptable chromatographic and/or mass spectral data, wherein the method comprises assigning a flag to the chromatographic and/or mass spectral data as acceptable or non-acceptable based on the classified quality.

6. The method according to the preceding claim, wherein the method comprises providing at least one information depending on the flag of the chromatographic and/or mass spectral data to a user via at least one user-interface (128).

7. The method according to any one of the preceding claims, wherein the machine learning model uses a feature set (118), wherein the feature set (118) comprises at least one feature selected from the group consisting of: peak area, peak background, relative background, ion ratio, Q4 ratio, retention time ratio, peak asymmetry, asymmetry ratio, peak width, peak width ratio, area of integration residuals, confidence interval of peak area, mass shift, full width half maximum, signal to noise ratio, single cycle ratio median, single cycle ion ratio median, peak height, peak fit mean squared error, fit-intensity correlation, Earth Mover's Distance, and a deviation of any of the mentioned features when derived from processed data and raw data.

8. The method according to any one of the preceding claims, wherein the method comprises
c) (120) at least one training step, wherein the training step (120) comprises training the machine learning model based on the training dataset.

9. The method according to the preceding claim, wherein the training step (120) comprises training of machine learning models for different analytes.

10. The method according to any one of the preceding claims, wherein the trained machine learning model is trained on at least one training dataset comprising historical chromatographic and/or mass spectral data.

11. The method according to any one of the preceding claims, wherein the semi-synthetic chromatographic and/or mass spectral data comprises modified historical chromatographic and/or mass spectral data, wherein the historical chromatographic and/or mass spectral data is modified by one or more of introducing at least one interference, introducing background, introducing at least one shift in retention time, modifying peak width, replacing an internal standard signal by a chromatogram from a double blank sample.

12. A test system (122) configured for performing the method according to any one of the preceding claims, wherein the test system (122) comprises
- at least one communication interface (124) configured for receiving processed chromatographic and/or mass spectral data obtained by at least one mass spectrometry device (112),
- at least one processing device (126) configured for classifying quality of the chromatographic and/or mass spectral data by applying at least one trained machine learning model on the chromatographic and/or mass spectral data, wherein the trained machine learning model uses at least one regression model (116), wherein the trained machine learning model is an analyte-specific trained machine learning model;
- at least one user interface (128) configured for providing information about the classified quality to a user,
**characterized in that** the trained machine learning model is trained on at least one training dataset comprising semi-synthetic chromatographic and/or mass spectral data.

13. The test system (122) according to the preceding claim, wherein the test system (122) is configured to carry out steps a) to b) and optionally step c) of the method according to any one of the preceding claims referring to a method.

14. A computer program comprising instructions which, when the program is executed by a test system (122) according to any one of the preceding claims referring to a test system, cause the test system to carry out steps a) to b) and optionally step c) of the method according to any one of the preceding claims referring to a method.

15. A computer-readable storage medium comprising instructions which, when executed by a test system (122) according to any one of the preceding claims referring to a test system, cause the test system to carry out steps a) to b) and optionally step c) of the method according to any one of the preceding claims referring to a method.

## Patentansprüche

1. Computerimplementiertes Verfahren zur automatisierten Überprüfung von chromatografischen und/oder Massenspektraldaten, wobei das Verfahren die folgenden Schritte umfasst:
a) (110) Bereitstellen von verarbeiteten chromatografischen und/oder Massenspektraldaten, die durch mindestens eine Massenspektrometrievorrichtung (112) erhalten werden;
b) (114) Klassifizieren der Qualität der chromatografischen und/oder Massenspektraldaten durch Anwenden mindestens eines trainierten Modells für maschinelles Lernen auf die chromatografischen und/oder Massenspektraldaten, wobei das trainierte Modell für maschinelles Lernen mindestens ein Regressionsmodell (116) verwendet, wobei das trainierte Modell für maschinelles Lernen ein analytspezifisches trainiertes Modell für maschinelles Lernen ist,
**dadurch gekennzeichnet, dass** das trainierte Modell für maschinelles Lernen an mindestens einem Trainingsdatensatz trainiert wird, der halbsynthetische chromatografische und/oder Massenspektraldaten umfasst.

2. Verfahren nach dem vorhergehenden Anspruch, wobei der Analyt mindestens eine Zielsubstanz ist, die aus der Gruppe ausgewählt ist, die aus Vitamin D, Missbrauchsdrogen, Therapeutika, Hormonen und Metaboliten besteht, die in einer Probe zu quantifizieren sind.

3. Verfahren nach einem der vorhergehenden Ansprüche, wobei das Regressionsmodell (116) mindestens ein Regressionsmodell ist, ausgewählt aus der Gruppe, bestehend aus einem Zufallswald; einem Gradientenverstärkungswald; einer Partial Least Squares-, einer Lasso-Regression; einer logistischen Regression; einer Bayes-Regression.

4. Verfahren nach einem der vorhergehenden Ansprüche, wobei das Verfahren vollständig automatisch durchgeführt wird.

5. Verfahren nach einem der vorhergehenden Ansprüche, wobei die klassifizierte Qualität verwendet wird, um zwischen akzeptablen und nicht akzeptablen chromatografischen und/oder Massenspektraldaten zu unterscheiden, wobei das Verfahren das Zuweisen einer Kennzeichnung zu den chromatografischen und/oder Massenspektraldaten als akzeptabel oder nicht akzeptabel basierend auf der klassifizierten Qualität umfasst.

6. Verfahren nach dem vorhergehenden Anspruch, wobei das Verfahren das Bereitstellen mindestens einer Information in Abhängigkeit von der Kennzeichnung der chromatografischen und/oder Massenspektraldaten für einen Benutzer über mindestens eine Benutzerschnittstelle (128) umfasst.

7. Verfahren nach einem der vorhergehenden Ansprüche, wobei das Modell für maschinelles Lernen einen Merkmalssatz (118) verwendet, wobei der Merkmalssatz (118) mindestens ein Merkmal umfasst, ausgewählt aus der Gruppe, bestehend aus: Peakfläche, Peakhintergrund, relativem Hintergrund, Ionenverhältnis, Q4-Verhältnis, Retentionszeitverhältnis, Peakasymmetrie, Asymmetrieverhältnis, Peakbreite, Peakbreitenverhältnis, Fläche von Integrationsresiduen, Konfidenzintervall der Peakfläche, Massenverschiebung, Halbmaximum der vollen Breite, Signal-RauschVerhältnis, Einzelzyklus-Verhältnis-Median, Einzelzyklus-Ionenverhältnis-Median, Peakhöhe, Peak-Fit-Mean-Squared-Fehler, Fit-Intensität-Korrelation, Earth-Mover-Distanz und einer Abweichung eines der genannten Merkmale bei der Ableitung aus verarbeiteten Daten und Rohdaten.

8. Verfahren nach einem der vorhergehenden Ansprüche, wobei das Verfahren Folgendes umfasst:
c) (120) mindestens einen Trainingsschritt, wobei der Trainingsschritt (120) das Trainieren des Modells für maschinelles Lernen basierend auf dem Trainingsdatensatz umfasst.

9. Verfahren nach dem vorhergehenden Anspruch, wobei der Trainingsschritt (120) das Trainieren von Modellen für maschinelles Lernen für verschiedene Analyten umfasst.

10. Verfahren nach einem der vorhergehenden Ansprüche, wobei das trainierte Modell für maschinelles Lernen an mindestens einem Trainingsdatensatz trainiert wird, der historische chromatografische und/oder Massenspektraldaten umfasst.

11. Verfahren nach einem der vorhergehenden Ansprüche, wobei die halbsynthetischen chromatografischen und/oder Massenspektraldaten modifizierte historische chromatografische und/oder Massenspektraldaten umfassen, wobei die historischen chromatografischen und/oder Massenspektraldaten durch eines oder mehrere von Folgendem modifiziert werden: Einführen mindestens einer Interferenz, Einführen von Hintergrund, Einführen mindestens einer Verschiebung der Retentionszeit, Modifizieren der Peakbreite, Ersetzen eines internen Standardsignals durch ein Chromatogramm aus einer Doppelblindprobe.

12. Testsystem (122), das zum Durchführen des Verfahrens nach einem der vorhergehenden Ansprüche konfiguriert ist, wobei das Testsystem (122) Folgendes umfasst:
- mindestens eine Kommunikationsschnittstelle (124), die zum Empfangen von verarbeiteten chromatografischen und/oder Massenspektraldaten konfiguriert ist, die durch mindestens eine Massenspektrometrievorrichtung (112) erhalten werden,
- mindestens eine Verarbeitungsvorrichtung (126), die zum Klassifizieren der Qualität der chromatografischen und/oder Massenspektraldaten durch Anwenden mindestens eines trainierten Modells für maschinelles Lernen auf die chromatografischen und/oder Massenspektraldaten konfiguriert ist, wobei das trainierte Modell für maschinelles Lernen mindestens ein Regressionsmodell (116) verwendet, wobei das trainierte Modell für maschinelles Lernen ein analytspezifisches trainiertes Modell für maschinelles Lernen ist;
- mindestens eine Benutzerschnittstelle (128), die zum Bereitstellen von Informationen über die klassifizierte Qualität für einen Benutzer konfiguriert ist,
**dadurch gekennzeichnet, dass** das trainierte Modell für maschinelles Lernen an mindestens einem Trainingsdatensatz trainiert wird, der halbsynthetische chromatografische und/oder Massenspektraldaten umfasst.

13. Testsystem (122) nach dem vorhergehenden Anspruch, wobei das Testsystem (122) zum Ausführen der Schritte a) bis b) und gegebenenfalls Schritt c) des Verfahrens nach einem der vorhergehenden Ansprüche, die sich auf ein Verfahren beziehen, konfiguriert ist.

14. Computerprogramm, umfassend Anweisungen, die bewirken, dass das Testsystem die Schritte a) bis b) und gegebenenfalls Schritt c) des Verfahrens nach einem der vorhergehenden Ansprüche, die sich auf ein Verfahren beziehen, ausführt, wenn das Programm durch ein Testsystem (122) nach einem der vorhergehenden Ansprüche, die sich auf ein Testsystem beziehen, ausgeführt wird.

15. Computerlesbares Speichermedium, umfassend Anweisungen, die bewirken, dass das Testsystem die Schritte a) bis b) und gegebenenfalls Schritt c) des Verfahrens nach einem der vorhergehenden Ansprüche, die sich auf ein Verfahren beziehen, ausführt, wenn sie durch ein Testsystem (122) nach einem der vorhergehenden Ansprüche, die sich auf ein Testsystem beziehen, ausgeführt werden.

## Revendications

1. Procédé mis en œuvre par ordinateur de contrôle de qualité automatique de données chromatographiques et/ou spectrales de masse, dans lequel le procédé comprend les étapes suivantes :
a) (110) fourniture de données chromatographiques et/ou spectrales de masse traitées obtenues par au moins un dispositif de spectrométrie de masse (112) ;
b) (114) classement de la qualité des données chromatographiques et/ou spectrales de masse en appliquant au moins un modèle d'apprentissage machine entraîné sur les données chromatographiques et/ou spectrales de masse, le modèle d'apprentissage machine entraîné utilisant au moins un modèle de régression (116), le modèle d'apprentissage machine entraîné étant un modèle d'apprentissage machine entraîné spécifique à un analyte,
**caractérisé en ce que** le modèle d'apprentissage machine entraîné est entraîné sur au moins un ensemble de données d'entraînement comprenant des données chromatographiques et/ou spectrales de masse semi-synthétiques.

2. Procédé selon la revendication précédente, dans lequel l'analyte est au moins une substance cible choisie dans le groupe constitué par la vitamine D, les stupéfiants, les médicaments thérapeutiques, les hormones et les métabolites qui doivent être quantifiés à partir d'un échantillon.

3. Procédé selon l'une quelconque des revendications précédentes, dans lequel le modèle de régression (116) est au moins un modèle de régression choisi dans le groupe constitué par une forêt aléatoire ; une forêt d'amplification de gradient ; une régression des moindres carrés partiels, une régression lasso ; une régression logistique ; une régression bayésienne.

4. Procédé selon l'une quelconque des revendications précédentes, dans lequel le procédé est réalisé de manière entièrement automatique.

5. Procédé selon l'une quelconque des revendications précédentes, dans lequel la qualité classée est utilisée pour distinguer entre des données chromatographiques et/ou spectrales de masse acceptables et non acceptables, dans lequel le procédé comprend l'attribution d'un indicateur comme étant acceptable ou non acceptable aux données chromatographiques et/ou spectrales de masse sur la base de la qualité classée.

6. Procédé selon la revendication précédente, dans lequel le procédé comprend la fourniture d'au moins une information en fonction de l'indicateur des données chromatographiques et/ou spectrales de masse à un utilisateur par l'intermédiaire d'au moins une interface utilisateur (128).

7. Procédé selon l'une quelconque des revendications précédentes, dans lequel le modèle d'apprentissage machine utilise un ensemble de caractéristiques (118), dans lequel l'ensemble de caractéristiques (118) comprend au moins une caractéristique choisie dans le groupe constitué par : l'aire de pic, le bruit de fond de pic, le bruit de fond relatif, le rapport ionique, le rapport Q4, le rapport de temps de rétention, l'asymétrie de pic, le rapport d'asymétries, la largeur de pic, le rapport de largeurs de pic, l'aire des valeurs résiduelles d'intégration, l'intervalle de confiance de l'aire de pic, le décalage de masse, la largeur à mi-hauteur, le rapport signal sur bruit, la médiane du rapport sur cycle unique, la médiane du rapport ionique sur cycle unique, la hauteur de pic, l'erreur quadratique moyenne ajustée au pic, la corrélation ajustement-intensité, la distance de Wasserstein et un écart de n'importe laquelle des caractéristiques mentionnées lorsqu'elles sont dérivées de données traitées et de données brutes.

8. Procédé selon l'une quelconque des revendications précédentes, dans lequel le procédé comprend
c) (120) au moins une étape d'entraînement, l'étape d'entraînement (120) comprenant l'entraînement du modèle d'apprentissage machine en se basant sur l'ensemble de données d'entraînement.

9. Procédé selon la revendication précédente, dans lequel l'étape d'entraînement (120) comprend l'entraînement de modèles d'apprentissage machine pour différents analytes.

10. Procédé selon l'une quelconque des revendications précédentes, dans lequel le modèle d'apprentissage machine entraîné est entraîné sur au moins un ensemble de données d'entraînement comprenant des données chromatographiques et/ou spectrales de masse d'historique.

11. Procédé selon l'une quelconque des revendications précédentes, dans lequel les données chromatographiques et/ou spectrales de masse semi-synthétiques comprennent des données chromatographiques et/ou spectrales de masse d'historique modifiées, dans lequel les données chromatographiques et/ou spectrales de masse d'historique sont modifiées par un ou plusieurs parmi l'introduction d'au moins une interférence, l'introduction d'un bruit de fond, l'introduction d'au moins un décalage de temps de rétention, la modification d'une largeur de pic, le remplacement d'un signal d'étalon interne par un chromatogramme d'un échantillon double blanc.

12. Système de test (122) configuré pour réaliser le procédé selon l'une quelconque des revendications précédentes, dans lequel le système de test (122) comprend
- au moins une interface de communication (124) configurée pour recevoir des données chromatographiques et/ou spectrales de masse traitées obtenues par au moins un dispositif de spectrométrie de masse (112),
- au moins un dispositif de traitement (126) configuré pour classer la qualité des données chromatographiques et/ou spectrales de masse en appliquant au moins un modèle d'apprentissage machine entraîné sur les données chromatographiques et/ou spectrales de masse, le modèle d'apprentissage machine entraîné utilisant au moins un modèle de régression (116), le modèle d'apprentissage machine entraîné étant un modèle d'apprentissage machine entraîné spécifique à un analyte ;
- au moins une interface utilisateur (128) configurée pour fournir des informations au sujet de la qualité classée à un utilisateur,
**caractérisé en ce que** le modèle d'apprentissage machine entraîné est entraîné sur au moins un ensemble de données d'entraînement comprenant des données chromatographiques et/ou spectrales de masse semi-synthétiques.

13. Système de test (122) selon la revendication précédente, dans lequel le système de test (122) est configuré pour mettre en œuvre les étapes a) à b) et éventuellement l'étape c) du procédé selon l'une quelconque des revendications précédentes faisant référence à un procédé.

14. Programme informatique comprenant des instructions qui, lorsque le programme est exécuté par un système de test (122) selon l'une quelconque des revendications précédentes se référant à un système de test, amènent le système de test à mettre en œuvre les étapes a) à b) et éventuellement l'étape c) du procédé selon l'une quelconque des revendications précédentes se référant à un procédé.

15. Support de stockage lisible par ordinateur comprenant des instructions qui, lorsqu'elles sont exécutées par un système de test (122) selon l'une quelconque des revendications précédentes se référant à un système de test, amènent le système de test à mettre en œuvre les étapes a) à b) et éventuellement l'étape c) du procédé selon l'une quelconque des revendications précédentes se référant à un procédé.
